# EUROPEAN PATENT SPECIFICATION

(11) **EP 4 563 943 B1**
(45) Date of publication and mention of the grant of the patent: **25.03.2026**
(21) Application number: 24215918.4
(22) Date of filing: 27.11.2024
(51) Int. Cl.: G01C 21/34, G08G 1/0968, G08G 1/00

(54) **ROUTE VARIATION FOR AUTONOMOUS VEHICLES**
ROUTENVARIATION FÜR AUTONOME FAHRZEUGE
VARIATION DE ROUTE POUR VÉHICULES AUTONOMES

(30) Priority: 30.11.2023 US 202363604298 P; 04.10.2024 US 202418906650
(43) Date of publication of application: 04.06.2025
(73) Proprietor: WAYMO LLC, Mountain View, CA 94043 (US)
(72) Inventor: CHEN, Robert, Mountain View, 94043 (US); MARGINES, David Yonchar, Mountain View, 94043 (US); BAHRI, Sahil, Mountain View, 94043 (US)
(74) Representative: Derry, Paul Stefan

(56) References cited:
- US-A1- 2019 179 336
- US-A1- 2022 307 848
- US-A1- 2023 168 098

## Description

### CROSS REFERENCE TO RELATED APPLICATIONS

The present application claims priority from U.S. Provisional Application No. 63/604,298, filed November 30, 2023, and U.S. Utility Application No. 18/906,650, filed October 4, 2024.

### BACKGROUND

Autonomous vehicles for instance, vehicles that may not require a human driver, can be used to aid in the transport of passengers or items from one location to another. Such vehicles may operate in a fully autonomous mode where passengers may provide some initial input, such as a pickup or destination location, and the autonomous vehicle maneuvers itself to that location. Autonomous vehicles are equipped with various types of sensors in order to detect objects in the surroundings. For example, autonomous vehicles may include sonar, radar, camera, lidar, and other devices that scan, generate and/or record data about the autonomous vehicle's surroundings. The sensor data may be combined with pre-stored map information in order to enable the autonomous vehicle to plan trajectories in order to maneuver itself through the surroundings along a route.

However, when a fleet of autonomous vehicles operates in a particular service area using a common map, it is likely that such autonomous vehicles may use the same or similar routes which cause the autonomous vehicles to drive on the same roads or portions of roads. This may result in overuse of certain roads and potentially congestion. This may also arise in situations in which a plurality of autonomous vehicles is traveling to or from one general location (e.g., in the case of an airport, concert, sporting or other event). In some instances, if an autonomous vehicle becomes stranded on a particular road, if other autonomous vehicles also use such roads, they may also become stranded causing even greater congestion concerns.

US 2023/168098 A1 discloses a technique allowing reduction in the occurrence of a traffic jam caused by autonomous driving by an autonomous driving vehicle. A traveling plan preparation apparatus includes a traveling plan preparation unit that prepares an autonomous driving traveling plan on the basis of traveling cost including convenience cost. The traveling plan preparation unit increases the convenience cost as a congestion level becomes higher, and performs at least one of a process of increasing the convenience cost with a smaller margin of time and a process of reducing the convenience cost with greater closeness of a road to a pick-up position.

US 2019/179336 A1 discloses assigning a fleet of driverless vehicles to a plurality of parking locations for parking vehicles of the fleet. For instance, locations of the vehicles of the fleet as well as a number of available spaces at each of the plurality of parking location locations may be tracked. A subset of the fleet not already located at one of the plurality of parking locations is identified. At least one assignment assigning each vehicle of the subset to a respective parking location of the plurality of parking locations is determined according to the numbers of available spaces and the identified locations of the subset. For the at least one assignment, a total cost is determined by determining a cost value for each of a plurality of factors. The given assignment is sent to the fleet based on the total cost and the cost value.

### BRIEF SUMMARY

The matter for protection is defined by the claims.

Aspects of the disclosure provide a method. The method includes identifying, by one or more processors of one or more server computing devices, a plurality of routes, each route of the plurality being a current route on which an autonomous vehicle of a fleet of autonomous vehicles is currently traveling, wherein each of the autonomous vehicles uses a cost-based analysis to determine routes; determining, by the one or more processors, that a cluster of autonomous vehicles of the fleet of autonomous vehicles on a road segment is likely to occur; and sending, by the one or more processors, a signal to one or more of the autonomous vehicles of the cluster of autonomous vehicles a signal to adjust a cost of traversing the road segment in order to increase a likelihood of the one or more of the autonomous vehicles of the cluster of autonomous vehicles avoiding the road segment, wherein sending the signal is based on whether the one or more of the autonomous vehicles of the cluster of autonomous vehicles are transporting passengers and/or wherein sending the signal is based on a state of charge or fuel of the one or more of the autonomous vehicles of the cluster of autonomous vehicles.

In one example, each route of the plurality of routes includes a list of edges of map information each corresponding to a different road segment. In another example, determining that the cluster of autonomous vehicles is likely to occur is based on a sliding window of time. In this example, determining that the cluster of autonomous vehicles is likely to occur is based on a threshold number of autonomous vehicles expected to traverse the road segment during the sliding window of time. In addition or alternatively, the method also includes determining the threshold number of autonomous vehicles window based on a type of the road segment. In addition or alternatively, the method also includes determining the sliding window based on a type of the road segment.

In another example, the signal is a first signal, and the method further includes sending a second signal to a second one of the one or more of the autonomous vehicles of the cluster of autonomous vehicles to adjust the cost of traversing the road segment, wherein the first signal is configured to cause a first adjustment in the cost and the second signal is configured to cause a second adjustment in the cost, and wherein the first adjustment is different from the second adjustment. In another example, the method also includes continuing to send additional signals to the one or more of the autonomous vehicles of the cluster of autonomous vehicles until the one or more of the autonomous vehicles of the cluster of autonomous vehicles change to one or more new routes that do not include the road segment. In this example, the method also includes limiting adjustments of the cost of the road segment for the one or more of the autonomous vehicles of the cluster of autonomous vehicles to a threshold maximum. In another example, the signal includes an instruction indicating how long the cost is to be adjusted.

Another aspect of the disclosure provides a system. The system includes one or more processors configured to: identify a plurality of routes, each route of the plurality being a current route on which an autonomous vehicle of a fleet of autonomous vehicles is currently traveling, wherein each of the autonomous vehicles uses a cost-based analysis to determine routes; determine that a cluster of autonomous vehicles of the fleet of autonomous vehicles is likely to occur on a road segment; and send a signal to one or more of the autonomous vehicles of the cluster of autonomous vehicles a signal to adjust a cost of traversing the road segment in order to increase a likelihood of the one or more of the autonomous vehicles of the cluster of autonomous vehicles avoiding the road segment, wherein sending the signal is based on whether the one or more of the autonomous vehicles of the cluster of autonomous vehicles are transporting passengers and/or wherein sending the signal is based on a state of charge or fuel of the one or more of the autonomous vehicles of the cluster of autonomous vehicles.

In one example, the one or more processors are further configured to determine that the cluster of autonomous vehicles is likely to occur based on a sliding window of time. In this example, the one or more processors are further configured to determine that the cluster of autonomous vehicles is likely to occur based on a threshold number of autonomous vehicles expected to traverse the road segment during the sliding window of time. In addition or alternatively, the one or more processors are further configured to determine the sliding window based on a type of the road segment. In another example, the signal is a first signal, and the one or more processors are further configured to send a second signal to a second one of the one or more of the autonomous vehicles of the cluster of autonomous vehicles to adjust the cost of traversing the road segment, wherein the first signal is configured to cause a first adjustment in the cost and the second signal is configured to cause a second adjustment in the cost, and wherein the first adjustment is different from the second adjustment. In another example, the one or more processors are further configured to continue to send additional signals to the one or more of the autonomous vehicles of the cluster of autonomous vehicles until the one or more of the autonomous vehicles of the cluster of autonomous vehicles change to one or more new routes that do not include the road segment. In another example, the signal includes an instruction indicating how long the cost is to be adjusted. In another example, the system also includes the autonomous vehicle.

### BRIEF DESCRIPTION OF THE DRAWINGS

FIGURE 1 is a functional diagram of an example vehicle in accordance with an exemplary embodiment.
FIGURES 2A-2B are an example of map information in accordance with aspects of the disclosure.
FIGURE 3A-3B are example external views of a vehicle in accordance with aspects of the disclosure.
FIGURE 4 is a pictorial diagram of an example system in accordance with aspects of the disclosure.
FIGURE 5 is a functional diagram of the system of FIGURE 4 in accordance with aspects of the disclosure.
FIGURES 6A-6D are an example of map information and routes in accordance with aspects of the disclosure.
FIGURE 7 is an example of map information and in accordance with aspects of the disclosure.
FIGURE 8 is an example of map information and in accordance with aspects of the disclosure.
FIGURE 9 is an example of map information and a route in accordance with aspects of the disclosure.
FIGURE 10 is a flow diagram in accordance with aspects of the disclosure.

### DETAILED DESCRIPTION

### OVERVIEW

The technology relates to route variation for autonomous vehicles. For instance, when a fleet of autonomous vehicles operates in a particular service area using a common map, it is likely that such autonomous vehicles may use the same or similar routes which cause the autonomous vehicles to cluster on the same roads or portions of roads at the same or similar times. This may result in overuse of certain roads and potentially congestion. This may also arise in situations in which a plurality of autonomous vehicles is traveling to or from one general location (e.g., in the case of an airport, concert, sporting or other event). In some instances, if an autonomous vehicle becomes stranded on a particular road, if other autonomous vehicles also use such roads, they may also become stranded causing even greater congestion concerns.

To avoid this, a route variation approach may be used. For example, as these autonomous vehicles drive around, their routing systems may generate routes for the autonomous vehicles to follow to a destination. At the same time, certain information about the status of the autonomous vehicles including current routes may be reported to a fleet management system. This information may be leveraged in order to determine when it may be appropriate to send the autonomous vehicles on different routes. This may involve adjusting costs of certain map information to discourage traversal of such areas of the route information. This may help distribute traffic more evenly between the various feasible route options and may prevent overuse of such areas.

As noted above, as an autonomous vehicle of a fleet maneuvers itself towards a destination, the autonomous vehicle's routing system may generate routes to respective destinations for each autonomous vehicle. For example, a routing system may store detailed map information, e.g., pre-stored, highly detailed maps. The map information used for planning routes not only requires information on individual lanes, but also the nature of lane boundaries to determine where lane changes are allowed, but need not include other details such as the locations of crosswalks, traffic lights, stop signs, etc., though some of this information may be useful for routing purposes.

The map information may be configured as a roadgraph. The roadgraph may include a plurality of graph nodes and edges representing features such as crosswalks, traffic lights, road signs, road or lane segments, etc., that together make up the road network of the map information. The routing system may use the aforementioned map information to determine a route from a current location (e.g. a location of a current node) to a destination.

Routes may be generated using a cost-based analysis which attempts to select a route to the destination with the lowest cost. Costs may be assessed in any number of ways such as based on one, or any combination, of: time to the destination, distance traveled (each edge may be associated with a cost to traverse that edge), types of maneuvers required, convenience to passengers or the vehicle, etc. In this regard, each edge of the map information may be associated with a cost (e.g., a numerical value) to traverse that edge (longer edges or edges with lower speed limits may be associated with higher costs). Each route may include a list of a plurality of nodes and edges which the vehicle can use to reach the destination. Thus, the cost of a route may be computed by summing the costs of the edges of the route.

Certain information about the status of the autonomous vehicles including current routes may be reported to a fleet management system. For example, a current route may be sent as a list of node or edge identifiers. This information may be sent via a network, such as a mobile network. In this regard, the fleet management system may receive the information from the plurality of autonomous vehicles.

The fleet management system may receive the current routes and other information, and may determine whether there will be a cluster of autonomous vehicles on a road segment within a sliding window of time. For instance, the fleet management system may use the received current routes to determine when there will be a cluster of autonomous vehicles on a certain road segment within a sliding window of time. This may involve determining at time when each autonomous vehicle will traverse each edge of its respective current route and comparing. If some number of vehicles will traverse the same edge within the sliding window of time, the fleet management system may determine that there will be a cluster of autonomous vehicles on that edge.

Based on a determination that there will be a cluster of autonomous vehicles on a road segment within the sliding window of time, the fleet management system may attempt to vary the routes of one or more the autonomous vehicles within the cluster. This may involve sending a signal to one or more of the autonomous vehicles within the cluster to adjust a cost of the edge in their respective map information. For instance, the adjustment may increase the cost of the edge by a fixed amount and thereby increase a likelihood of the one or more autonomous vehicles avoiding the road segment. This may increase the overall cost of the autonomous vehicle's current route and potentially discourage the autonomous vehicle's routing system from selecting the same route including the edge.

The features described herein may provide for the variation of routes for autonomous vehicles. This may provide a proactive approach to avoiding overuse of certain roads and potential congestion rather than a reactive approach. In addition, management of the route variation at the fleet management system may provide a more reliable and consistent approach than attempting doing so at the vehicle and/or via vehicle to vehicle communications.

### EXAMPLE SYSTEMS

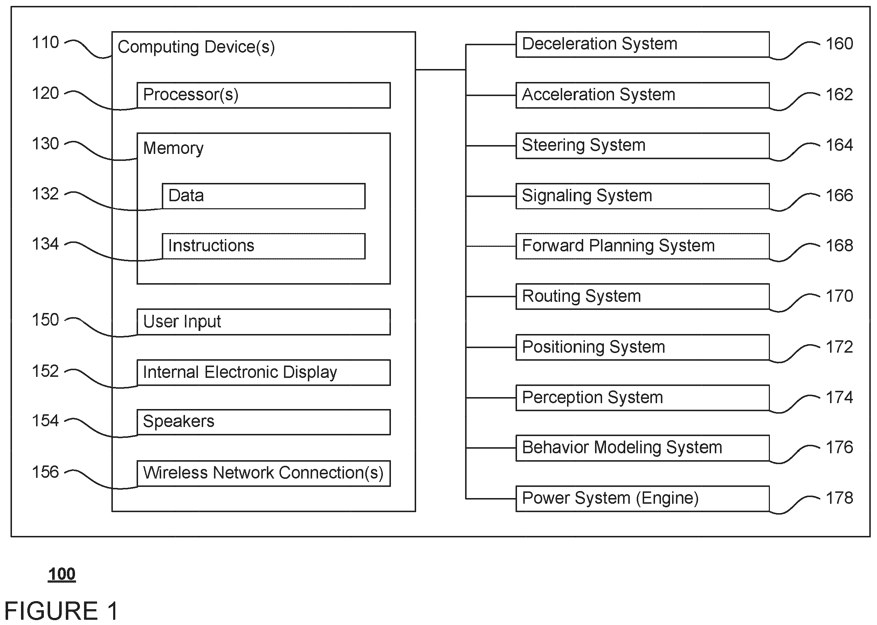

As shown in FIGURE 1, an autonomous vehicle 100 in accordance with one aspect of the disclosure includes various components. Vehicles, such as those described herein, may be configured to operate in one or more different driving modes. For instance, in a manual driving mode, a driver may directly control acceleration, deceleration, and steering via inputs such as an accelerator pedal, a brake pedal, a steering wheel, etc. A vehicle may also operate in one or more autonomous driving modes including, for example, a semi or partially autonomous driving mode in which a person exercises some amount of direct or remote control over driving operations, or a fully autonomous driving mode in which the autonomous vehicle handles the driving operations without direct or remote control by a person. These vehicles may be known by different names including, for example, autonomously driven vehicles, selfdriving vehicles, and so on.

The U.S. National Highway Traffic Safety Administration (NHTSA) and the Society of Automotive Engineers (SAE) have each identified different levels to indicate how much, or how little, a vehicle controls the driving, although different organizations may categorize the levels differently. Moreover, such classifications may change (e.g., be updated) overtime.

As described herein, in a semi or partially autonomous driving mode, even though the autonomous vehicle assists with one or more driving operations (e.g., steering, braking and/or accelerating to perform lane centering, adaptive cruise control or emergency braking), the human driver is expected to be situationally aware of the autonomous vehicle's surroundings and supervise the assisted driving operations. Here, even though the autonomous vehicle may perform all driving tasks in certain situations, the human driver is expected to be responsible for taking control as needed.

In contrast, in a fully autonomous driving mode, the control system of the autonomous vehicle performs all driving tasks and monitors the driving environment. This may be limited to certain situations such as operating in a particular service region or under certain time or environmental restrictions, or may encompass driving under all conditions without limitation. In a fully autonomous driving mode, a person is not expected to take over control of any driving operation.

Unless indicated otherwise, the architectures, components, systems and methods described herein can function in a semi or partially autonomous driving mode, or a fully-autonomous driving mode.

While certain aspects of the disclosure are particularly useful in connection with specific types of vehicles, the autonomous vehicle may be any type of vehicle including, but not limited to, cars, trucks (e.g. garbage trucks, tractor-trailers, pickup trucks, etc.), motorcycles, buses, recreational vehicles, street cleaning or sweeping vehicles, etc. The autonomous vehicle may have one or more computing devices, such as computing device 110 containing one or more processors 120, memory 130 and other components typically present in general purpose computing devices.

The memory 130 stores information accessible by the one or more processors 120, including data 132 and instructions 134 that may be executed or otherwise used by the processor 120. The memory 130 may be of any type capable of storing information accessible by the processor, including a computing device or computer-readable medium, or other medium that stores data that may be read with the aid of an electronic device, such as a hard-drive, memory card, ROM, RAM, DVD or other optical disks, as well as other write-capable and read-only memories. Systems and methods may include different combinations of the foregoing, whereby different portions of the instructions and data are stored on different types of media.

The instructions 134 may be any set of instructions to be executed directly (such as machine code) or indirectly (such as scripts) by the processor. For example, the instructions may be stored as computing device code on the computing device-readable medium. In that regard, the terms "instructions" and "programs" may be used interchangeably herein. The instructions may be stored in object code format for direct processing by the processor, or in any other computing device language including scripts or collections of independent source code modules that are interpreted on demand or compiled in advance. Functions, methods and routines of the instructions are explained in more detail below.

The data 132 may be retrieved, stored or modified by processor 120 in accordance with the instructions 134. For instance, although the claimed subject matter is not limited by any particular data structure, the data may be stored in computing device registers, in a relational database as a table having a plurality of different fields and records, XML documents or flat files. The data may also be formatted in any computing device-readable format.

The one or more processors 120 may be any conventional processors, such as commercially available CPUs or GPUs. Alternatively, the one or more processors may include a dedicated device such as an ASIC or other hardware-based processor. Although FIGURE 1 functionally illustrates the processor, memory, and other elements of computing device 110 as being within the same block, it will be understood by those of ordinary skill in the art that the processor, computing device, or memory may actually include multiple processors, computing devices, or memories that may or may not be stored within the same physical housing. For example, memory may be a hard drive or other storage media located in a housing different from that of computing device 110. Accordingly, references to a processor or computing device will be understood to include references to a collection of processors or computing devices or memories that may or may not operate in parallel.

Computing devices 110 may include all of the components normally used in connection with a computing device such as the processor and memory described above as well as a user input 150 (e.g., one or more of a button, mouse, keyboard, touch screen and/or microphone), various electronic displays (e.g., a monitor having a screen or any other electrical device that is operable to display information), and speakers 154 to provide information to a passenger of the autonomous vehicle 100 or others as needed. For example, electronic display 152 may be located within a cabin of autonomous vehicle 100 and may be used by computing devices 110 to provide information to passengers within the autonomous vehicle 100.

Computing devices 110 may also include one or more wireless network connections 156 to facilitate communication with other computing devices, such as the client computing devices and server computing devices described in detail below. The wireless network connections may include short range communication protocols such as Bluetooth, Bluetooth low energy (LE), cellular connections, as well as various configurations and protocols including the Internet, World Wide Web, intranets, virtual private networks, wide area networks, local networks, private networks using communication protocols proprietary to one or more companies, Ethernet, WiFi and HTTP, and various combinations of the foregoing.

Computing devices 110 may be part of an autonomous control system for the autonomous vehicle 100 and may be capable of communicating with various components of the autonomous vehicle in order to control the autonomous vehicle in an autonomous driving mode. For example, returning to FIGURE 1, computing devices 110 may be in communication with various systems of autonomous vehicle 100, such as deceleration system 160, acceleration system 162, steering system 164, signaling system 166, planning system 168, routing system 170, positioning system 172, perception system 174, behavior modeling system 176, and power system 178 in order to control the movement, speed, etc. of autonomous vehicle 100 in accordance with the instructions 134 of memory 130 in the autonomous driving mode.

As an example, computing devices 110 may interact with deceleration system 160 and acceleration system 162 in order to control the speed of the autonomous vehicle. Similarly, steering system 164 may be used by computing devices 110 in order to control the direction of autonomous vehicle 100. For example, if autonomous vehicle 100 is configured for use on a road, such as a car or truck, steering system 164 may include components to control the angle of wheels to turn the autonomous vehicle. Computing devices 110 may also use the signaling system 166 in order to signal the autonomous vehicle's intent to other drivers or vehicles, for example, by lighting turn signals or brake lights when needed.

Routing system 170 may be used by computing devices 110 in order to generate a route to a destination using map information. Planning system 168 may be used by computing device 110 in order to generate short-term trajectories that allow the autonomous vehicle to follow routes generated by the routing system. In this regard, the planning system 168 and/or routing system 166 may store detailed map information, e.g., pre-stored, highly detailed maps identifying a road network including the shape and elevation of roadways, lane lines, intersections, crosswalks, speed limits, traffic lights, buildings, signs, real time traffic information (updated as received from a remote computing device), pullover spots, vegetation, or other such objects and information.

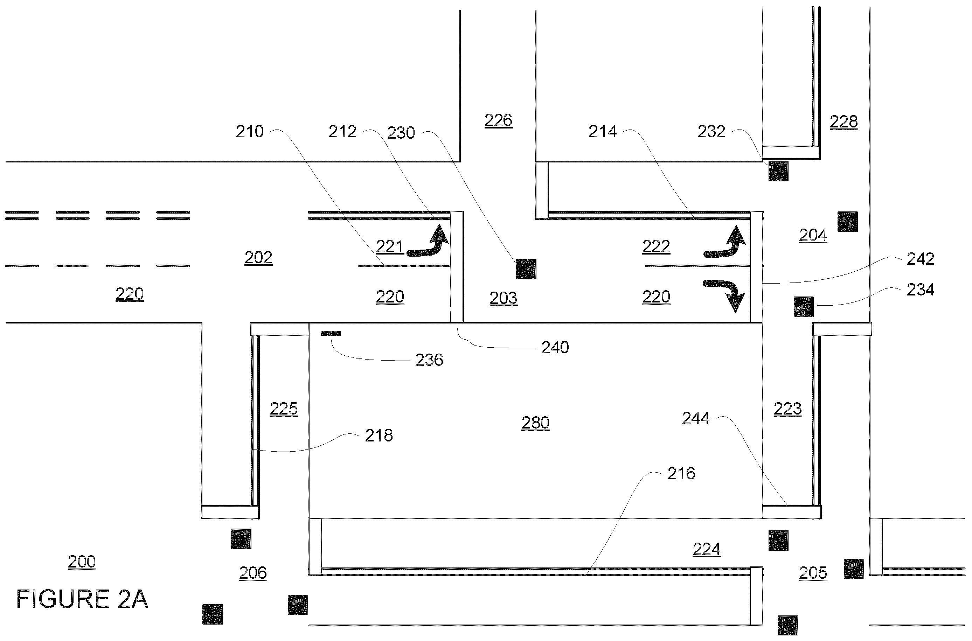

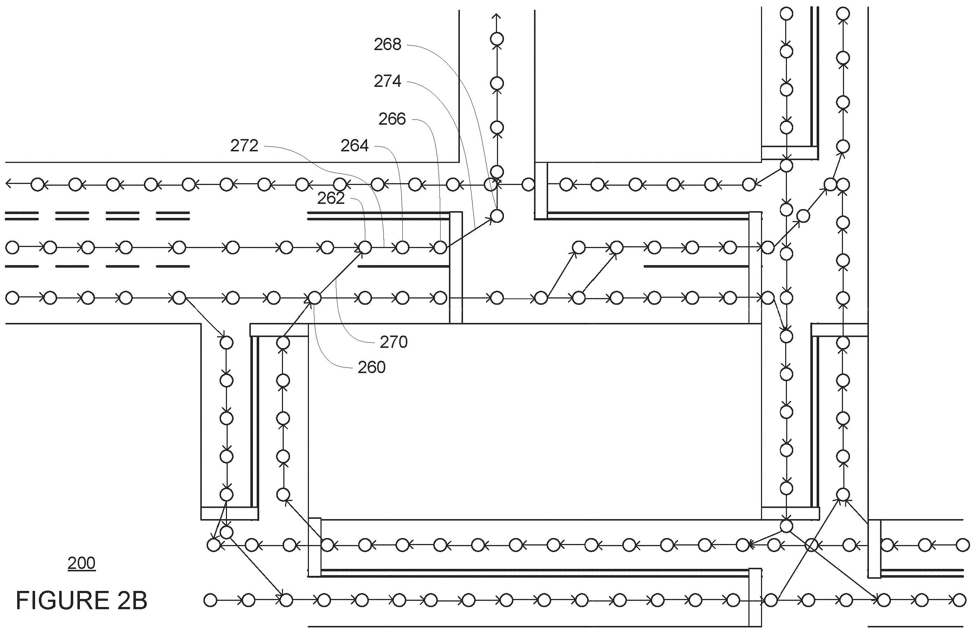

FIGURES 2A and 2B are an example of map information 200 for a small section of roadway including intersections 202, 203, 204, 205, 206. FIGURE 2A depicts a portion of the map information 200 that includes information identifying the shape, location, and other characteristics of lane markers or lane lines 210, 212, 214, 216, 218, lanes 220, 221, 222, 223, 224, 225, 226, 228, traffic control devices including traffic signal lights 230, 232, 234 and stop sign 236 (not depicted in FIGURE 2B for clarity), stop lines 240, 242, 244, as well as a nondrivable area 280. In this example, lane 221 approaching intersection 204 is a left turn only lane, lane 222 approaching intersection 206 is a left turn only lane, and lane 226 is a one-way street where the direction of traffic moves away from intersection 204. In addition to the aforementioned features, the map information may also include information that identifies the direction of traffic for each lane as well as information that allows the computing devices 110 to determine whether the vehicle has the right of way to complete a particular maneuver (i.e. complete a turn or cross a lane of traffic or intersection).

The map information may be configured as a roadgraph. The roadgraph may include a plurality of graph nodes and edges representing features such as crosswalks, traffic lights, road signs, road or lane segments, etc., that together make up the road network of the map information. Each edge is defined by a starting graph node having a specific geographic location (e.g. latitude, longitude, altitude, etc.), an ending graph node having a specific geographic location (e.g. latitude, longitude, altitude, etc.), and a direction. This direction may refer to a direction the autonomous vehicle 100 must be moving in in order to follow the edge (i.e. a direction of traffic flow). The graph nodes may be located at fixed or variable distances. For instance, the spacing of the graph nodes may range from a few centimeters to a few meters and may correspond to the speed limit of a road on which the graph node is located. In this regard, greater speeds may correspond to greater distances between graph nodes. The edges may represent driving along the same lane or changing lanes. Each node and edge may have a unique identifier, such as a latitude and longitude location of the node or starting and ending locations or nodes of an edge. In addition to nodes and edges, the map may identify additional information such as types of maneuvers required at different edges as well as which edges or lanes or other mapped areas are drivable.

For instance, FIGURE 2B depicts most of the map information of FIGURE 2A with the addition of a plurality of edges represented by arrows and graph nodes (depicted as circles) corresponding to the road network of map information 200. Though many edges and graph nodes are depicted, only a few are referenced for clarity and simplicity. For example, FIGURE 2B includes edges 270, 272, 274 arranged between pairs of starting and ending graph nodes as graph nodes 260, 262, 264, 266. As can be seen, graph nodes 260 represents a starting point for edge 270, and graph nodes 262 represents an ending point for edge 270. Similarly, graph node 262 represents a starting point for edge 272, and graph node 264 represents an ending point for edge 272. In addition, graph node 266 represents a starting point for edge 274, and graph node 268 represents an ending point for edge 274. Again, the direction of each of these graph nodes is represented by the arrow of the edge. Edge 270 may represent a path a vehicle can follow to change from lane 220 to lane 221, edge 272 may represent a path that a vehicle can follow within lane 220, and edge 274 may represent a path a vehicle can follow to make a left turn at intersection 203 in order to move from lane 221 to lane 226. Although not shown, each of these edges may be associated with an identifier, for instance, a numeric value corresponding to a relative or actual location of the edge or simply the locations of the starting and ending graph nodes. In this regard, edges and graph nodes may be used to determine how to route and plan routes and trajectories between locations, change lanes and make other maneuvers, though in operation, the autonomous vehicle 100 need not follow the nodes and edges exactly.

The routing system 166 may use the aforementioned map information to determine a route from a current location (e.g. a location of a current node) to a destination. Routes may be generated using a cost-based analysis which attempts to select a route to the destination with the lowest cost. Costs may be assessed in any number of ways such as based on one, or any combination, of: time to the destination, distance traveled (each edge may be associated with a cost to traverse that edge), types of maneuvers required, convenience to passengers or the autonomous vehicle, etc. Each route may include a list of a plurality of nodes and edges which the autonomous vehicle can use to reach the destination. Routes may be recomputed periodically as the autonomous vehicle travels to the destination.

The map information used for routing may be the same or a different map as that used for planning trajectories. For example, the map information used for planning routes not only requires information on individual lanes, but also the nature of lane boundaries (e.g., solid white, dash white, solid yellow, etc.) to determine where lane changes are allowed. However, unlike the map used for planning trajectories, the map information used for routing need not include other details such as the locations of crosswalks, traffic lights, stop signs, etc., though some of this information may be useful for routing purposes. For example, between a route with a large number of intersections with traffic controls (such as stop signs or traffic lights) versus one with no or very few traffic controls, the latter route may have a lower cost (e.g. because it is faster) and therefore be preferable.

Positioning system 170 may be used by computing devices 110 in order to determine the autonomous vehicle's relative or absolute position on a map or on the earth. For example, the positioning system 170 may include a GPS receiver to determine the device's latitude, longitude and/or altitude position. Other location systems such as laser-based localization systems, inertial-aided GPS, or camera-based localization may also be used to identify the location of the autonomous vehicle. The location of the autonomous vehicle may include an absolute geographical location, such as latitude, longitude, and altitude, a location of a node or edge of the roadgraph as well as relative location information, such as location relative to other cars immediately around it, which can often be determined with less noise than the absolute geographical location.

The positioning system 172 may also include other devices in communication with computing devices 110, such as an accelerometer, gyroscope or another direction/speed detection device to determine the direction and speed of the autonomous vehicle or changes thereto. By way of example only, an acceleration device may determine its pitch, yaw or roll (or changes thereto) relative to the direction of gravity or a plane perpendicular thereto. The device may also track increases or decreases in speed and the direction of such changes. The device's provision of location and orientation data as set forth herein may be provided automatically to the computing device 110, other computing devices and combinations of the foregoing.

The perception system 174 also includes one or more components for detecting objects external to the autonomous vehicle such as other road users (vehicles, pedestrians, bicyclists, etc.) obstacles in the roadway, traffic lights and other signals, signs, trees, buildings, etc. For example, the perception system 174 may include Lidars, sonar, radar, cameras, microphones and/or any other detection devices that generate and/or record data which may be processed by the computing devices of computing devices 110. In the case where the autonomous vehicle is a passenger vehicle such as a minivan or car, the autonomous vehicle may include Lidar, cameras, and/or other sensors mounted on or near the roof, fenders, bumpers or other convenient locations.

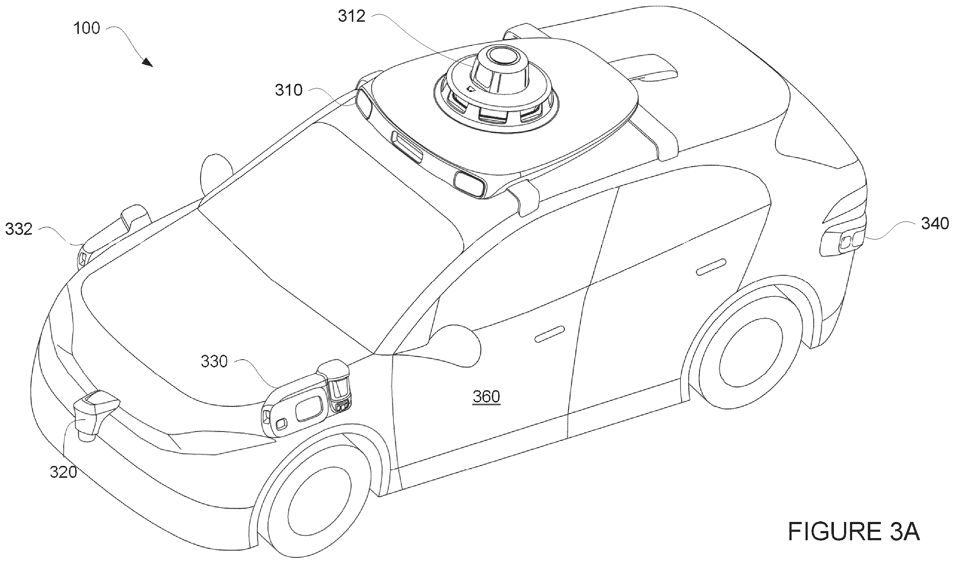

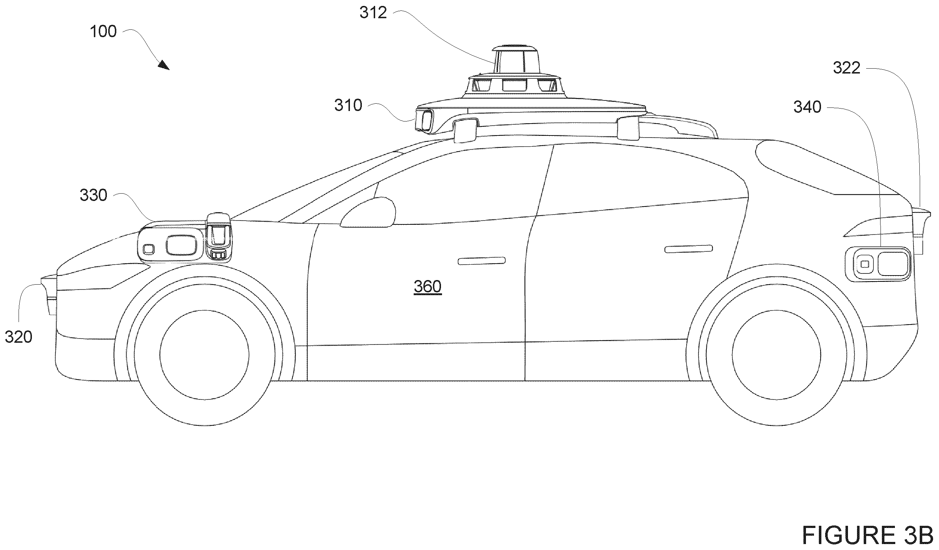

For instance, FIGURES 3A-3B are an example external views of autonomous vehicle 100. In this example, roof-top housing 310 and upper housing 312 may include a LIDAR sensor as well as various cameras and radar units. Upper housing 312 may include any number of different shapes, such as domes, cylinders, "cake-top" shapes, etc. In addition, housing 320, 322 (shown in FIGURE 3B) located at the front and rear ends of autonomous vehicle 100 and housings 330, 332 on the driver's and passenger's sides of the autonomous vehicle may each store a Lidar sensor and, in some instances, one or more cameras. For example, housing 330 is located in front of driver door 360. Autonomous vehicle 100 also includes a housing 340 for radar units and/or cameras located on the driver's side of the autonomous vehicle 100 proximate to the rear fender and rear bumper of autonomous vehicle 100. Another corresponding housing (not shown may also arranged at the corresponding location on the passenger's side of the autonomous vehicle 100. Additional radar units and cameras (not shown) may be located at the front and rear ends of autonomous vehicle 100 and/or on other positions along the roof or roof-top housing 310.

Computing devices 110 may be capable of communicating with various components of the autonomous vehicle in order to control the movement of autonomous vehicle 100 according to primary vehicle control code of memory of computing devices 110. For example, returning to FIGURE 1, computing devices 110 may include various computing devices in communication with various systems of autonomous vehicle 100, such as deceleration system 160, acceleration system 162, steering system 164, signaling system 166, forward planning system 168, routing system 170, positioning system 172, perception system 174, behavior modeling system 176, and power system 178 (i.e. the autonomous vehicle's engine or motor) in order to control the movement, speed, etc. of autonomous vehicle 100 in accordance with the instructions 134 of memory 130.

The various systems of the autonomous vehicle may function using autonomous vehicle control software in order to determine how to control the autonomous vehicle. As an example, a perception system software module of the perception system 174 may use sensor data generated by one or more sensors of an autonomous vehicle, such as cameras, Lidar sensors, radar units, sonar units, etc., to detect and identify objects and their characteristics. These characteristics may include location, type, heading, orientation, speed, acceleration, change in acceleration, size, shape, etc.

In some instances, characteristics may be input into a behavior prediction system software module of the behavior modeling system 176 which uses various behavior models based on object type to output one or more behavior predictions or predicted trajectories for a detected object to follow into the future (e.g. future behavior predictions or predicted future trajectories). In this regard, different models may be used for different types of objects, such as pedestrians, bicyclists, vehicles, etc. The behavior predictions or predicted trajectories may be a list of positions and orientations or headings (e.g. poses) as well as other predicted characteristics such as speed, acceleration or deceleration, rate of change of acceleration or deceleration, etc.

In other instances, the characteristics from the perception system 174 may be put into one or more detection system software modules, such as a traffic light detection system software module configured to detect the states of known traffic lights or signals, construction zone detection system software module configured to detect construction zones from sensor data generated by the one or more sensors of the autonomous vehicle as well as an emergency vehicle detection system configured to detect emergency vehicles from sensor data generated by sensors of the autonomous vehicle. Each of these detection system software modules may use various models to output a likelihood of a construction zone or an object being an emergency vehicle.

Detected objects, predicted trajectories, various likelihoods from detection system software modules, the map information identifying the autonomous vehicle's environment, position information from the positioning system 170 identifying the location and orientation of the autonomous vehicle, a destination location or node for the autonomous vehicle as well as feedback from various other systems of the autonomous vehicle may be input into a planning system software module of the planning system 168. The planning system 168 may use this input to generate planned trajectories for the autonomous vehicle to follow for some brief period of time into the future based on a route generated by a routing module of the routing system 170. Each planned trajectory may provide a planned path and other instructions for an autonomous vehicle to follow for some brief period of time into the future, such as 10 seconds or more or less. In this regard, the trajectories may define the specific characteristics of acceleration, deceleration, speed, direction, etc. to allow the autonomous vehicle to follow the route towards reaching a destination. A control system software module of computing devices 110 may be configured to control movement of the autonomous vehicle, for instance by controlling braking, acceleration and steering of the autonomous vehicle, in order to follow a trajectory.

The computing devices 110 may control the autonomous vehicle in one or more of the autonomous driving modes by controlling various components. For instance, by way of example, computing devices 110 may navigate the autonomous vehicle to a destination location completely autonomously using data from the detailed map information and planning system 168. Computing devices 110 may use the positioning system 170 to determine the autonomous vehicle's location and perception system 174 to detect and respond to objects when needed to reach the location safely. Again, in order to do so, computing device 110 and/or planning system 168 may generate trajectories and cause the autonomous vehicle to follow these trajectories, for instance, by causing the autonomous vehicle to accelerate (e.g., by supplying fuel or other energy to the engine or power system 178 by acceleration system 162), decelerate (e.g., by decreasing the fuel supplied to the engine or power system 178, changing gears, and/or by applying brakes by deceleration system 160), change direction (e.g., by turning the front or rear wheels of autonomous vehicle 100 by steering system 164), and signal such changes (e.g., by lighting turn signals) using the signaling system 166. Thus, the acceleration system 162 and deceleration system 160 may be a part of a drivetrain that includes various components between an engine of the autonomous vehicle and the wheels of the autonomous vehicle. Again, by controlling these systems, computing devices 110 may also control the drivetrain of the autonomous vehicle in order to maneuver the autonomous vehicle autonomously.

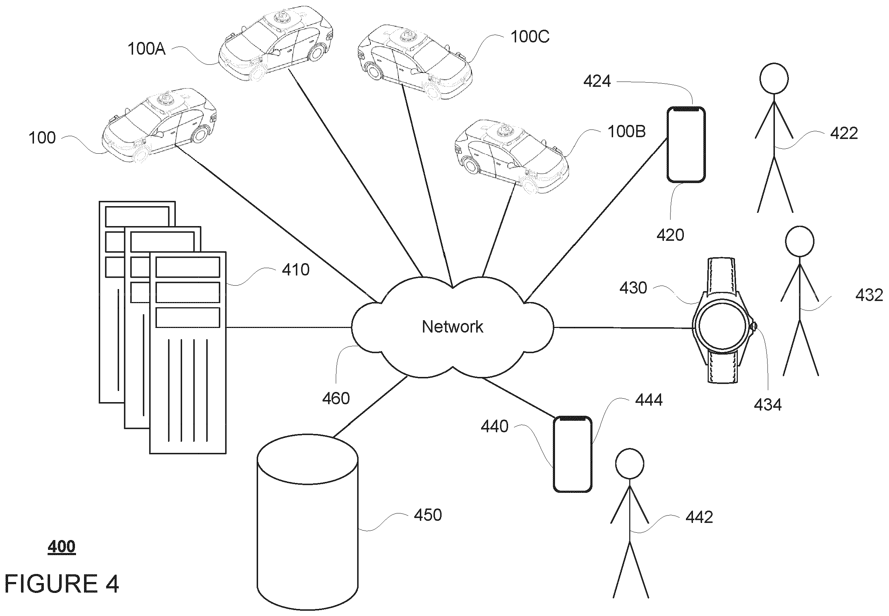

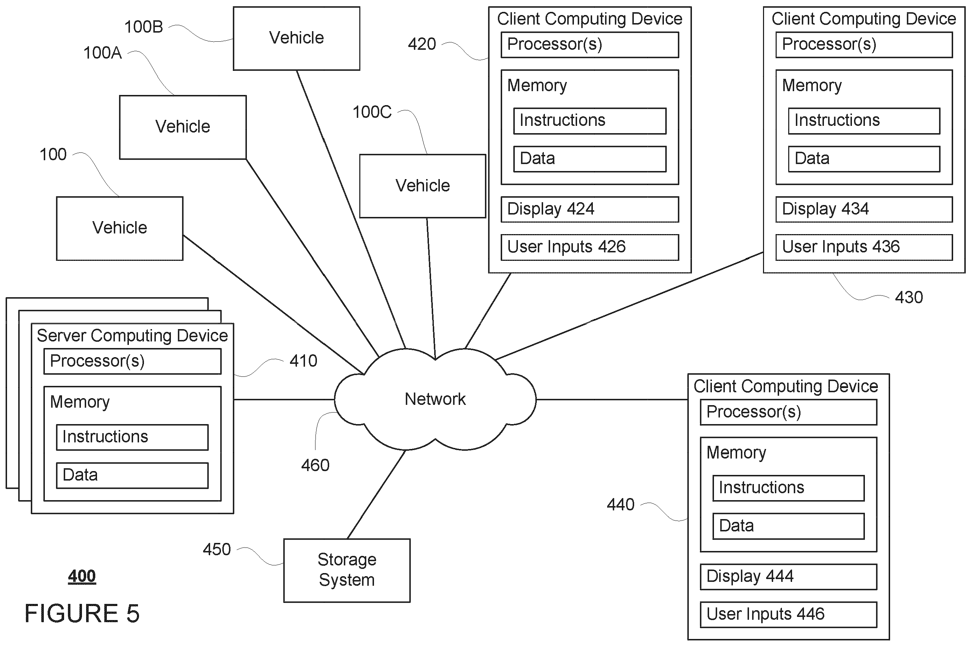

Computing device 110 of autonomous vehicle 100 may also receive or transfer information to and from other computing devices, such as those computing devices that are a part of the transportation service as well as other computing devices. FIGURES 4 and 5 are pictorial and functional diagrams, respectively, of an example system 400 that includes a plurality of computing devices 410, 420, 430, 440 and a storage system 450 connected via a network 460. System 400 also includes autonomous vehicles 100A, 100B and 100C, which may be configured the same as or similarly to autonomous vehicle 100. Although only a few vehicles and computing devices are depicted for simplicity, a typical system may include significantly more.

As shown in FIGURE 5, each of computing devices 410, 420, 430, 440 may include one or more processors, memory, data and instructions. Such processors, memories, data and instructions may be configured similarly to one or more processors 120, memory 130, data 132, and instructions 134 of computing device 110.

The network 460, and intervening nodes, may include various configurations and protocols including short range communication protocols such as Bluetooth, Bluetooth LE, the Internet, World Wide Web, intranets, virtual private networks, wide area networks, local networks, private networks using communication protocols proprietary to one or more companies, Ethernet, WiFi and HTTP, and various combinations of the foregoing. Such communication may be facilitated by any device capable of transmitting data to and from other computing devices, such as modems and wireless interfaces.

In one example, one or more computing devices 410 may include one or more server computing devices having a plurality of computing devices, e.g., a load balanced server farm, that exchange information with different nodes of a network for the purpose of receiving, processing and transmitting the data to and from other computing devices. For instance, one or more computing devices 410 may include one or more server computing devices that are capable of communicating with computing device 110 of autonomous vehicle 100 or a similar computing device of autonomous vehicle 100A, 100B, 100C as well as computing devices 420, 430, 440 via the network 460. For example, autonomous vehicles 100, 100A, 100B, 100C may be a part of a fleet of vehicles that can be dispatched by server computing devices to various locations.

In this regard, the server computing devices 410 may function as a fleet management system which can be used to track the status of autonomous vehicles of the fleet and arrange trips for passengers by assigning and dispatching vehicles such as autonomous vehicles 100, 100A, 100B, 100C. These assignments may include scheduling trips to different locations in order to pick up and drop off those passengers. In this regard, the server computing devices 410 may operate using scheduling system software in order to manage the aforementioned autonomous vehicle scheduling and dispatching. In addition, the computing devices 410 may use network 460 to transmit and present information to a user, such as user 422, 432, 442 on a display, such as displays 424, 434, 444 of computing devices 420, 430, 440. In this regard, computing devices 420, 430, 440 may be considered client computing devices.

As shown in FIGURE 3, each client computing device 420, 430 may be a personal computing device intended for use by a user 422, 432 and have all of the components normally used in connection with a personal computing device including a one or more processors (e.g., a central processing unit (CPU)), memory (e.g., RAM and internal hard drives) storing data and instructions, a display such as displays 424, 434, 444 (e.g., a monitor having a screen, a touch-screen, a projector, a television, or other device that is operable to display information), and user input devices 426, 436, 446 (e.g., a mouse, keyboard, touchscreen or microphone). The client computing devices may also include a camera for recording video streams, speakers, a network interface device, and all of the components used for connecting these elements to one another.

Although the client computing devices 420, 430 may each comprise a full-sized personal computing device, they may alternatively comprise mobile computing devices capable of wirelessly exchanging data with a server over a network such as the Internet. By way of example only, client computing device 420 may be a mobile phone or a device such as a wireless-enabled PDA, a tablet PC, a wearable computing device or system, or a netbook that is capable of obtaining information via the Internet or other networks. In another example, client computing device 430 may be a wearable computing system, such as a wristwatch as shown in FIGURE 3. As an example the user may input information using a small keyboard, a keypad, microphone, using visual signals with a camera, or a touch screen. As yet another example, client computing device 440 may be a desktop computing system including a keyboard, mouse, camera and other input devices.

In some examples, client computing device 420 may be a mobile phone used by a passenger of a vehicle. In other words, user 422 may represent a passenger. In addition, client computing device 430 may represent a smart watch for a passenger of a vehicle. In other words, user 432 may represent a passenger. The client computing device 440 may represent a workstation for a human operator, for example, a human operator of a depot area, a remote assistance operator, a technician who provides roadside assistance, or someone who may otherwise provide assistance to an autonomous vehicle and/or a passenger. In other words, user 442 may represent an operator (e.g. operations person) of a transportation service utilizing the autonomous vehicles 100, 100A, 100B, 100C. Although only a few passengers and human operators are shown in FIGURES 4 and 5, any number of such passengers and human operators (as well as their respective client computing devices) may be included in a typical system.

As with memory 130, storage system 450 can be of any type of computerized storage capable of storing information accessible by the server computing devices 410, such as a hard-drive, memory card, ROM, RAM, DVD, CD-ROM, write-capable, and read-only memories. In addition, storage system 450 may include a distributed storage system where data is stored on a plurality of different storage devices which may be physically located at the same or different geographic locations. Storage system 450 may be connected to the computing devices via the network 460 as shown in FIGURES 3 and 4, and/or may be directly connected to or incorporated into any of computing devices 110, 410, 420, 430, 440, etc. Storage system 450 may store various types of information which may be retrieved or otherwise accessed by a server computing devices, such as one or more server computing devices 410, in order to perform some of the features described herein.

### EXAMPLE METHODS

In addition to the operations described above and illustrated in the figures, various operations will now be described. It should be understood that the following operations do not have to be performed in the precise order described below. Rather, various steps can be handled in a different order or simultaneously, and steps may also be added or omitted.

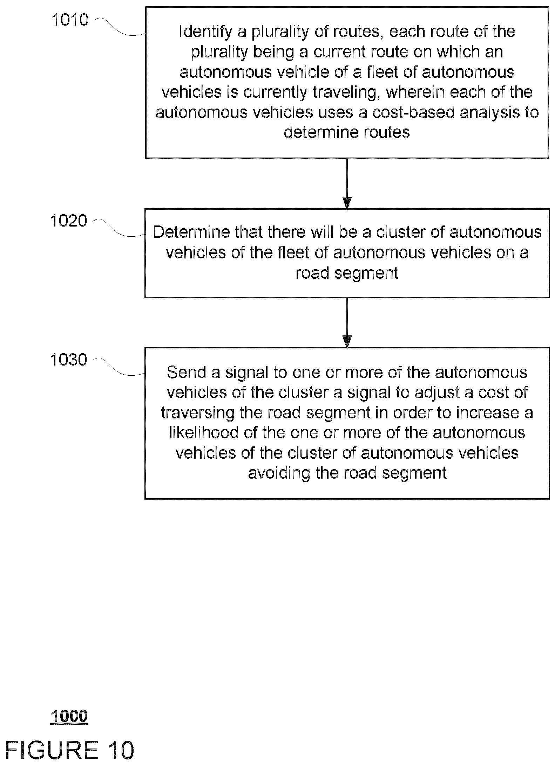

FIGURE 10 is an example flow diagram 1000 depicting an example of enabling route variation for autonomous vehicles, which may be performed by one or more processors, such as the one or more processors of the server computing devices 410. In this example, at block 1010, a plurality of routes is identified. Each route of the plurality being a current route on which an autonomous vehicle of a fleet of autonomous vehicles is currently traveling, and each of the autonomous vehicles uses a cost-based analysis to determine routes. Of course, these routes may be updated overtime as conditions (e.g., traffic, road closures, constructions, destinations of the autonomous vehicles, etc.) change.

As noted above, as an autonomous vehicle of a fleet maneuvers itself towards a destination, the autonomous vehicle's routing system may generate routes to respective destinations for each autonomous vehicle. For example, a routing system may store detailed map information, e.g., pre-stored, detailed maps. The map information used for planning routes may be the same or different from that used to plan trajectories.

Certain information about the status of the autonomous vehicles including current routes may be reported to the server computing devices 410. For example, a current route may be sent as a list of node or edge identifiers. Other information may include the pose (e.g., position and orientation of the autonomous vehicle), speed, state or charge or fuel (e.g., battery state, amount of gasoline, etc.) and other characteristics may also be sent. This information may be sent via a network, such as a mobile network including 4G or 5G depending on what is available where the autonomous vehicle is currently located.

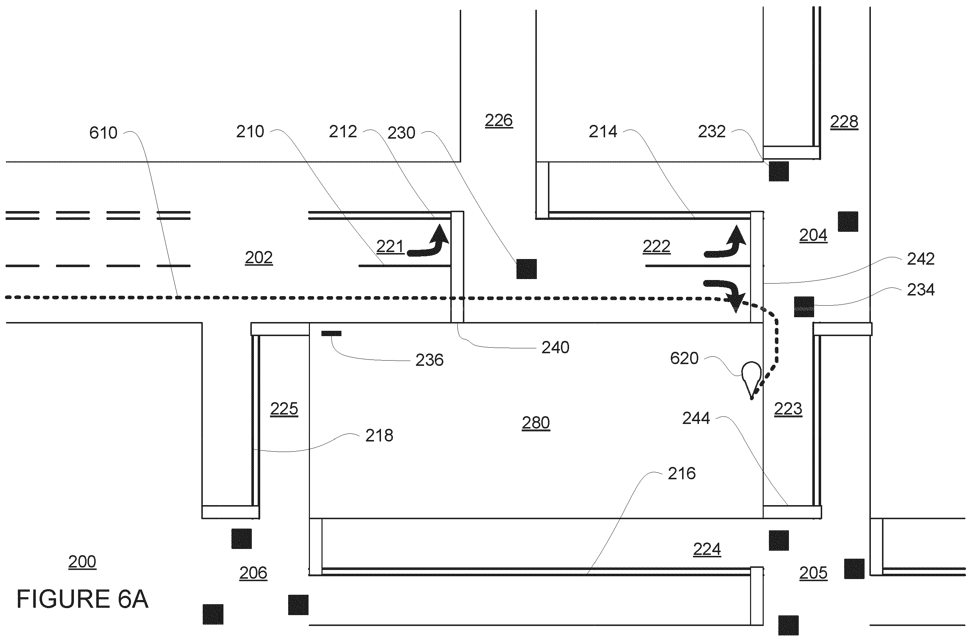

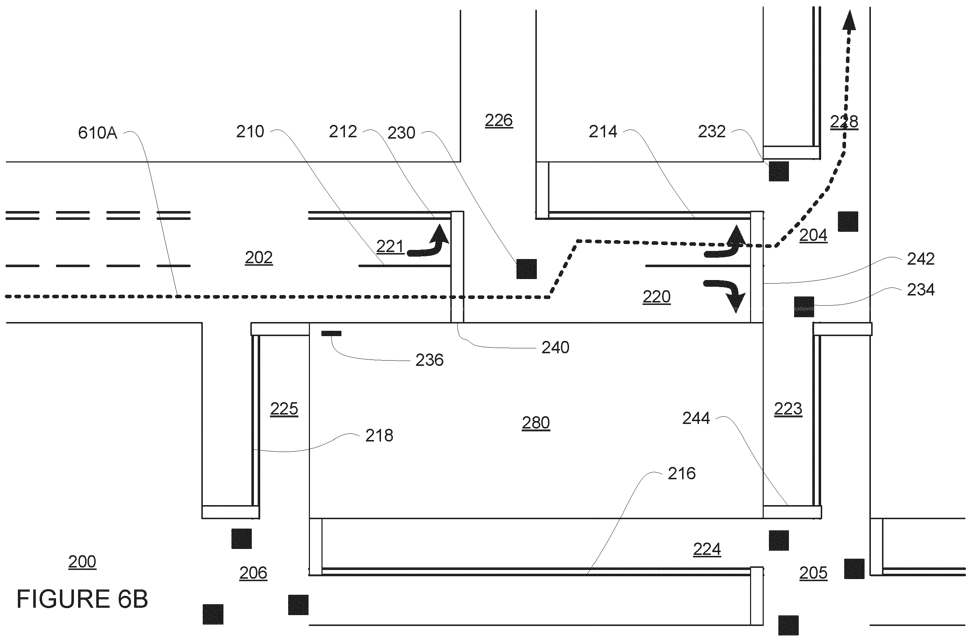

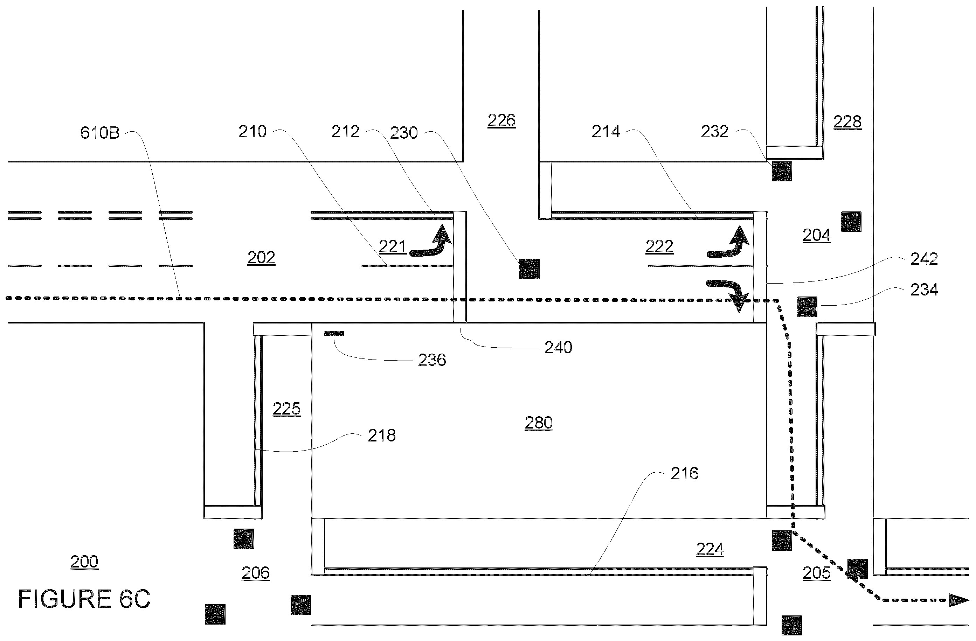

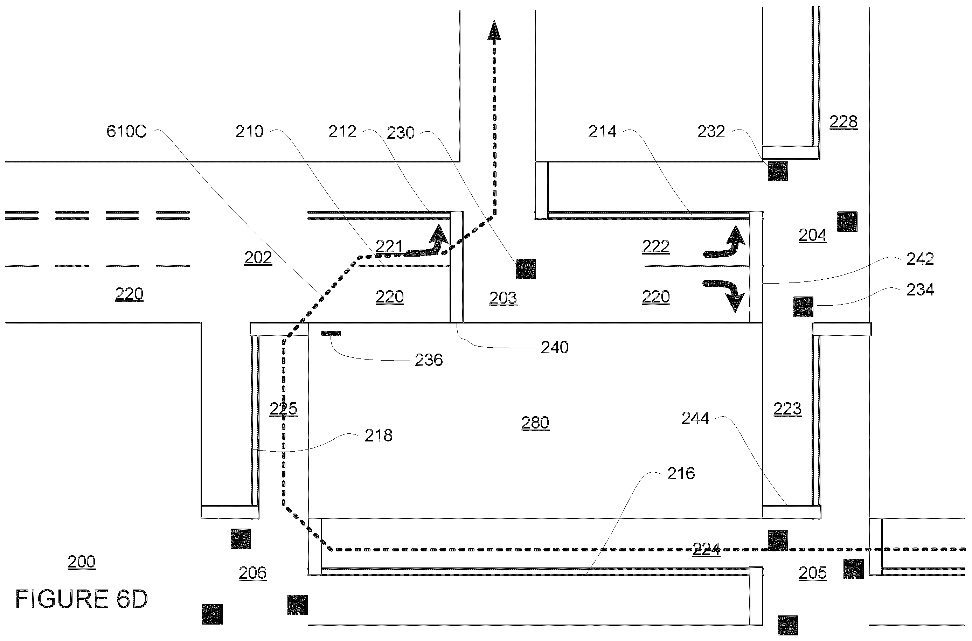

In this regard, the server computing devices 410 may receive the information from the plurality of autonomous vehicles, such as autonomous vehicles 100, 100A, 100B, 100C. As described with respect to autonomous vehicle 100, each of these autonomous vehicles may include a routing system 170 which utilizes a cost-based routing approach to determine routes. For example, FIGURE 6A is an example of the geographic area of the map information 200 and a route 610 on which the autonomous vehicle 100 is currently traveling to a destination 620 within the geographic area. FIGURE 6B is an example of the geographic area of the map information 200 and a route 610A on which the autonomous vehicle 100B is currently traveling to a destination outside of the geographic area. FIGURE 6C is an example of the geographic area of the map information 200 and a route 610B on which the autonomous vehicle 100C is currently traveling to a destination outside of the geographic area. FIGURE 6D is an example of the geographic area of the map information 200 and a route 610C on which the autonomous vehicle 100C is currently traveling to a destination outside of the geographic area. Each of these routes may be sent to the server computing devices 410 by respective computing devices of the autonomous vehicles 100, 100A, 100B, 100C. The server computing devices may then store these routes in the storage system 450 and retrieved as needed.

Returning to FIGURE 10, at block 1020, that a cluster of autonomous vehicles of the fleet of autonomous vehicles is likely to occur on a road segment is determined. The server computing devices 410 may receive the current routes and other information, and may determine whether a cluster of autonomous vehicles is likely to occur on a road segment within a sliding window of time. For instance, the server computing devices 410 may use the received current routes to predict when a cluster of autonomous vehicles is likely to occur on a certain road segment (e.g., edge) within a sliding window of time. Depending upon how the routes are defined (e.g., by edges or locations or other coordinates, etc.), the server computing devices may compare different types of information. For example, when the current routes are defined by lists of edges of the map information, this may involve estimating at time when each autonomous vehicle is likely traverse each edge of its respective current route and comparing to the times at which other autonomous vehicles are likely to traverse the same edge. Such estimations may be based on typical estimated time of arrival considerations including traffic, distance, speed limits, traffic controls (e.g., traffic lights, stop signs, etc.), and so on.

If a threshold number of vehicles is likely to traverse the same edge within the sliding window of time, the server computing devices 410 may determine that a cluster of autonomous vehicles is likely to occur on that edge. In addition, this predicting and determining may be made periodically (e.g., every second) or each time an update (e.g., with a current route) is received from one or more of the autonomous vehicles. Alternatively, rather than a fixed threshold, this determination could be made in other ways, such as by inputting the information reported to the server computing devices 410 from the autonomous vehicles described above into a machine learned model that suggests whether action should be taken to avoid a cluster in a certain area. In addition, other information, such as real time congestion information, information about upcoming events (e.g., concerts, sporting events, etc.), weather, schedule information (e.g., garbage collection schedules, bus schedules, etc.).

This sliding window of time may be a fixed period such as 1 minute, 5 minutes, 10 minutes or more or less. The threshold number of vehicles may be 2, 3, 4 or more or less vehicles. In this regard, if the sliding window is a minute and the threshold is 5 vehicles, if 5 autonomous vehicles are expected to traverse the same edge within a minute, the server computing devices 410 may determine that a cluster of vehicles is likely to be on that edge.

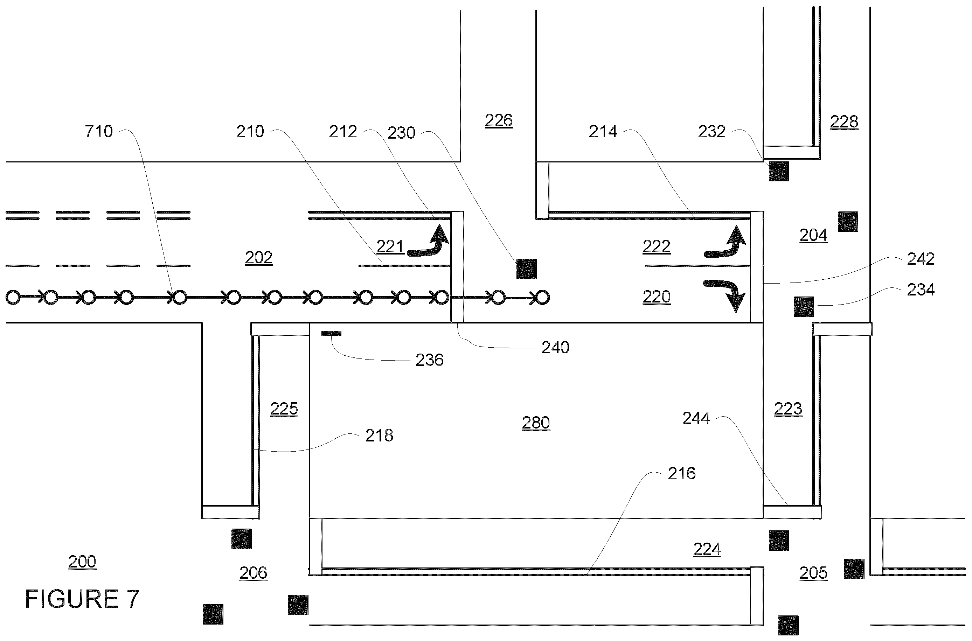

FIGURE 7 is an example of overlapping road segments including edges 710 of the map information 200 (as depicted in FIGURE 2B) among the routes 610, 610A, 610B, 610C for a sliding window of time. In this example, the threshold number of vehicles may be 3 within a sliding window of time of 10 minutes. The edges 710 include road segments from each of the routes 610, 610A, 610B, but not from route 610C as there are no overlapping segments with the route 610C. In this regard, while there is physical overlapping of the road segments, the autonomous vehicles 100, 100A, 100B need not be traversing these road segments all at the same time, but within the sliding window (e.g., within a 10 minute period of item). Based on the determination that the threshold number of vehicles (here autonomous vehicles 100, 100A, 100B) are likely to traverse the edges 710 within the sliding window of time, the server computing devices 410 may determine that a cluster of vehicles is likely to occur on the edges 710.

In some instances, the sliding window and threshold number of vehicles may differ based on characteristics of the edges of the map information. For instance, for an edge corresponding to a surface street the sliding window may be longer and/or the threshold number of vehicles may be lower than for an edge corresponding to a highway. In this regard, the server computing devices 410 may be more likely to vary routes that cluster on surface streets rather than on highways. In some instances, edges and/or clusters on highways may be ignored. In other instances, for an edge corresponding to a narrow street the sliding window may be longer and/or the threshold number of vehicles may be lower than for an edge corresponding to a wider street.

Returning to FIGURE 10, at block 1030, a signal is sent to one or more of the autonomous vehicles of the cluster of autonomous vehicles a signal to adjust a cost of traversing the road segment in order to increase a likelihood of the one or more of the autonomous vehicles of the cluster of autonomous vehicles avoiding the road segment. For instance, based on a determination that a cluster of autonomous vehicles is likely to occur on a road segment within the sliding window of time, the server computing devices 410 may attempt to vary the routes of one or more the autonomous vehicles within the cluster. This may involve sending a signal to one or more of the autonomous vehicles within the cluster to adjust a cost of the edge in their respective map information. For instance, the adjustment may increase the cost of the edge by a fixed amount and thereby increase a likelihood of the one or more autonomous vehicles avoiding the road segment. As an example if a cost of an edge is an arbitrary value (e.g., 0.2) this arbitrary value may be increased an arbitrary amount (e.g., 0.1), resulting in an increased cost (e.g., 0.3). This may increase the overall cost of the autonomous vehicle's current route and potentially discourage the autonomous vehicle's routing system from selecting the same route including the edge. Of course, the smaller the adjustment, the less likely the autonomous vehicle will change to a new route not including the edge.

For example, the server computing devices may send a signal to one or more of the autonomous vehicles within the cluster. Returning to the example of FIGURE 7, this may include one or more (or even all) of autonomous vehicles 100, 100A, 100B, but not 100C. In this regard, each of these autonomous vehicles may receive an instruction to increase the cost of each of the edges 710, for example to increase the costs of each of these edges by 0.1. Such increases may be incorporated into the local versions of the map information 200 stored at each respective one of the autonomous vehicles 100, 100A, 100B.

In some instances, varying the routes may involve adjusting the costs of the edge differently for different autonomous vehicles of the cluster of autonomous vehicles. In some examples, this may be based on the likely order of the autonomous vehicles of the cluster of autonomous vehicles traversing the edge. For example, the first autonomous vehicles may receive no signal to increase the cost of the edge, the second autonomous vehicles may receive a signal to increase the cost of the edge 0.1, the third autonomous vehicles may receive a signal to increase the cost of the edge 0.2, the fourth autonomous vehicles may receive a signal to increase the cost of the edge 0.3, and so on. In such instances where the value of the cost is increased, the server computing devices 410 may use some upper bound or threshold maximum (e.g., 0.6 or more or less) in order to avoid the autonomous vehicles taking routes which go too far out of the way, are too long, or otherwise inefficient.

For example, the server computing devices may send a signal to one or more of the autonomous vehicles within the cluster instructing each of the autonomous vehicles to adjust the cost of the edges 710 differently depending upon the sequence of autonomous vehicles of the cluster of autonomous vehicles that are expected to traverse the edges 710. Returning to the example of FIGURE 7, this may include each of autonomous vehicles 100, 100A, 100B, but not 100C. In this regard, each of these autonomous vehicles may receive an instruction to increase the cost of each of the edges 710. However, the increases may be determined based on the sequence in which the autonomous vehicles are expected to traverse the edges 710. For example, if autonomous vehicle 100 is expected to traverse the edges 710 before the autonomous vehicle 100A, and the autonomous vehicle 100A is expected to traverse the edges 710 before the autonomous vehicle 100B, the sequence of autonomous vehicles may be autonomous vehicle 100, autonomous vehicle 100A and finally autonomous vehicle 100B. Using the examples above, the autonomous vehicle 100 may receive no signal to increase the costs of the edges 710, while each of the autonomous vehicles 100A, 100B may receive signals to increase the costs of the edges 710. Based on the sequence, the server computing devices may send a signal to autonomous vehicle 100A to increase the costs of the edges 710 a first amount and a signal to the autonomous vehicle 100B to increase the costs of the edges 710 a second amount. The first amount may be less than the second amount (e.g., using the example above, the first amount may be 0.1 and the second amount may be 0.2). Such increases may be incorporated into the local versions of the map information 200 stored at each respective one of the autonomous vehicles 100, 100A, 100B.

For example, even if the costs of edges 710 are increased for the autonomous vehicle 100, such costs may not be enough to reroute the autonomous vehicle 100 given the location of the destination 620. Similarly, even if the costs of edges 710 are increased for the autonomous vehicle 100A, such costs may not be enough to reroute the autonomous vehicle 100 given the location of the destination of autonomous vehicle 100A.

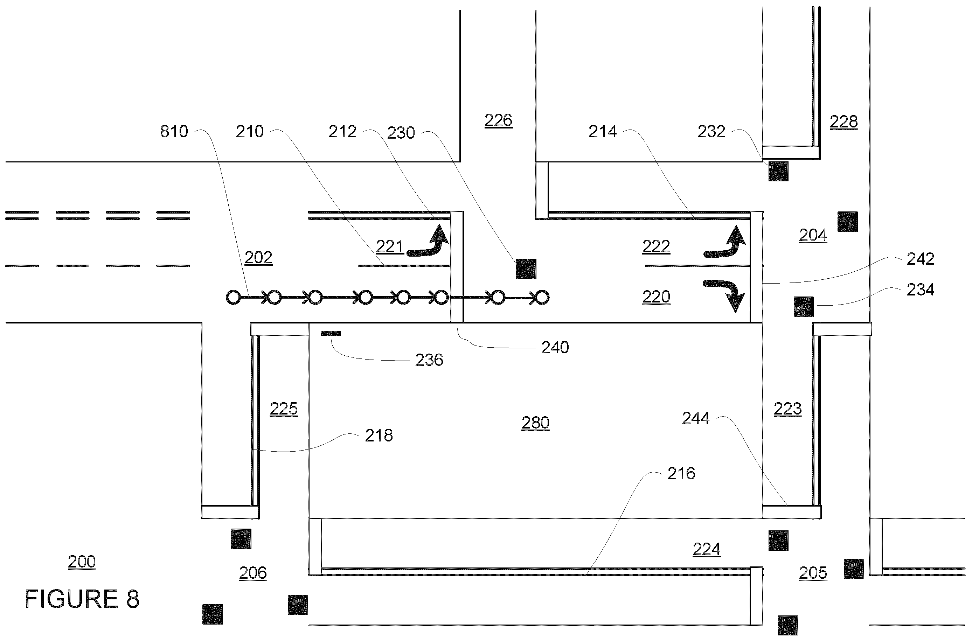

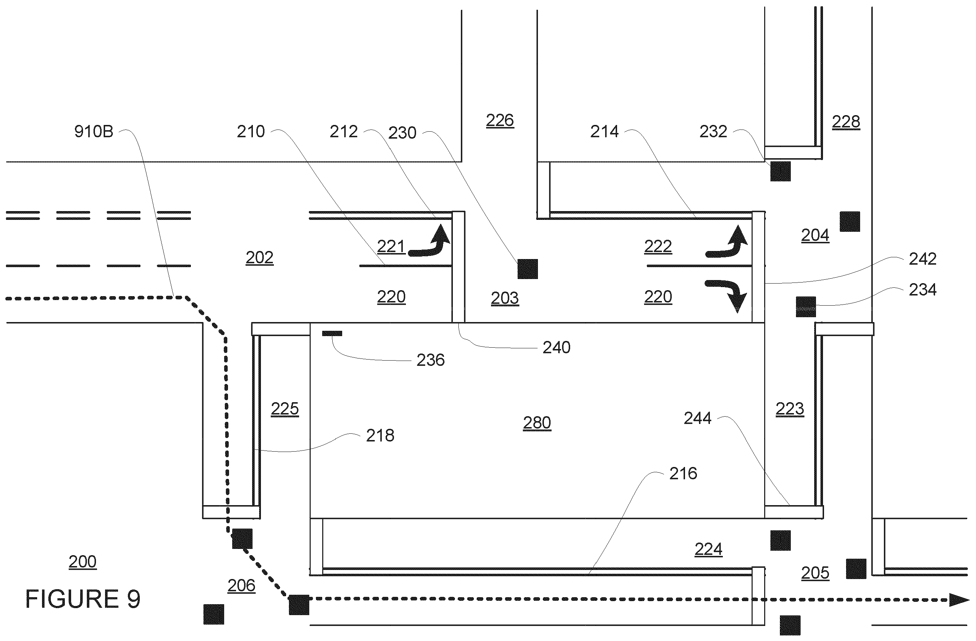

However, in the example of autonomous vehicle 100B, a small increase in the costs of the edges 710 may cause the autonomous vehicle 100B to avoid at least some of those edges (e.g., avoid edges 810 depicted in FIGURE 8). In other words, the routing system 170 may identify route 910B as depicted in FIGURE 9 as a lower cost option than the updated costs of route 610B of FIGURE 6C. As a result, the routing system 170 of the autonomous vehicle 100B may re-route the autonomous vehicle to turn at intersections 202 and 206 as depicted by route 910B.

In some instances, if the increased costs result in the autonomous vehicles of the cluster of autonomous vehicles maintaining their current routes or rather, continuing to traverse the edge, the server computing devices 410 may add additional adjustments. In other words, additional signals may be sent to one or more the autonomous vehicles of the cluster of autonomous vehicles in order to further increase the cost of the edge for the one or more autonomous vehicles. This may continue until one or more of the autonomous vehicles of the cluster of autonomous vehicles have changed to new routes that do not include the edge or which no longer result in the same cluster (even if over a different sliding window of time). Again, in such instances where the cost is increased multiple times, the server computing devices 410 may use some upper bound or threshold maximum (e.g., 0.6 or more or less) in order to avoid the autonomous vehicles taking routes which go too far out of the way, are too long, or otherwise inefficient.

These increased costs may persist for some period of time. For instance, the increases in the cost of an edge may persist until each of the autonomous vehicles of the cluster of autonomous vehicles reaches its current destination. As another instance, the increase in the cost of an edge may persist for a fixed period of time, such as 20 minutes or more or less. In this regard, the signal to increase the cost may also include an instruction indicating when the increased cost can be discarded (e.g., the cost of the segment can return to its original value).

The server computing devices 410 varies routes based on other characteristics of the autonomous vehicles. For example, the server computing devices 410 may not vary the routes of autonomous vehicles (e.g., may not adjust the costs of an edge) which are currently transporting passengers. Alternatively, the server computing devices 410 may not vary the routes of autonomous vehicles (e.g., may not adjust the costs of an edge) which are not currently transporting passengers. As another example, the server computing devices 410 may not vary routes of autonomous vehicles that are currently at a particular level of fuel or power (e.g., charge). This may avoid sending autonomous vehicles that require refueling or recharging to take longer routes.

In some instances, the server computing devices 410 may vary routes in order to encourage the autonomous vehicles to travel on certain nearby roads. For instance, if a particular edge has not been traversed in some period of time (e.g., several days, weeks, or months), the server computing devices 410 may increase the cost edges of nearby roads in order to encourage traversal of the particular edge. This may enable the autonomous vehicles to collect updated sensor data along the particular edge. This in turn may be used offline to maintain the accuracy of the map information, including, for example, the most up to date representation of any changes due to construction, road closures, traffic light changes, lane marking changes, and other changes that are relevant to accuracy of the roadgraph.

In some instances, even if the threshold number of vehicles would traverse a particular edge within a sliding window of time, there may be instances, where the one or more server computing devices does not attempt to vary routes. For instance in the case of picking up many passengers for different trips after an event such as a concert, sporting, or other event, there may be a cluster of vehicles which is appropriate in order to provide sufficient numbers of autonomous vehicles at some point in time in order to meet demand.

The features described herein may provide for the variation of routes for autonomous vehicles. This may provide a proactive approach to avoiding overuse of certain roads and potential congestion rather than a reactive approach. In addition, management of the route variation at the server computing devices 410 may provide a more reliable and consistent approach than attempting doing so at the vehicle and/or via vehicle to vehicle communications.

## Claims

1. A method comprising:
identifying (1010), by one or more processors (120) of one or more server computing devices (410), a plurality of routes (610, 610A, 610B, 610C), each route of the plurality being a current route on which an autonomous vehicle (110, 110A, 110B, 110C) of a fleet of autonomous vehicles is currently traveling, wherein each of the autonomous vehicles uses a cost-based analysis to determine routes;
determining (1020), by the one or more processors, that a cluster of autonomous vehicles of the fleet of autonomous vehicles is likely to occur on a road segment (710); and
sending (1030), by the one or more processors, a signal to one or more of the autonomous vehicles of the cluster of autonomous vehicles a signal to adjust a cost of traversing the road segment in order to increase a likelihood of the one or more of the autonomous vehicles of the cluster of autonomous vehicles avoiding the road segment,
**characterized in that** the sending the signal is based on whether the one or more of the autonomous vehicles of the cluster of autonomous vehicles are transporting passengers and/or the sending the signal is based on a state of charge or fuel of the one or more of the autonomous vehicles of the cluster of autonomous vehicles.

2. The method of claim 1, wherein sending the signal is based on whether the one or more of the autonomous vehicles of the cluster of autonomous vehicles are transporting passengers.

3. The method of claim 1, wherein sending the signal is based on a state of charge or fuel of the one or more of the autonomous vehicles of the cluster of autonomous vehicles.

4. The method of any preceding claim, wherein each route of the plurality of routes includes a list of edges of map information each corresponding to a different road segment.

5. The method of any preceding claim, wherein determining that the cluster of autonomous vehicles is likely to occur is based on a sliding window of time.

6. The method of claim 5, wherein determining that the cluster of autonomous vehicles is likely to occur is based on a threshold number of autonomous vehicles expected to traverse the road segment during the sliding window of time, and optionally wherein the method further comprises:
determining the threshold number of autonomous vehicles based on a type of the road segment and/or determining the sliding window of time based on a type of the road segment.

7. The method of any preceding claim, wherein the signal is a first signal, and the method further comprises sending a second signal to a second one of the one or more of the autonomous vehicles of the cluster of autonomous vehicles to adjust the cost of traversing the road segment, wherein the first signal is configured to cause a first adjustment in the cost and the second signal is configured to cause a second adjustment in the cost, and wherein the first adjustment is different from the second adjustment.

8. The method of any preceding claim, further comprising continuing to send additional signals to the one or more of the autonomous vehicles of the cluster of autonomous vehicles until the one or more of the autonomous vehicles of the cluster of autonomous vehicles change to one or more new routes that do not include the road segment, and optionally wherein the method further comprises limiting adjustments of the cost of the road segment for the one or more of the autonomous vehicles of the cluster of autonomous vehicles to a threshold maximum.

9. The method of any preceding claim, wherein the signal includes an instruction indicating how long the cost is to be adjusted.

10. A system comprising one or more processors (120) configured to:
identify (1010) a plurality of routes (610, 610A, 610B, 610C), each route of the plurality being a current route on which an autonomous vehicle (110, 110A, 110B, 110C) of a fleet of autonomous vehicles is currently traveling, wherein each of the autonomous vehicles uses a cost-based analysis to determine routes;
determine (1020) that a cluster of autonomous vehicles of the fleet of autonomous vehicles is likely to occur on a road segment (710); and
send (1030) a signal to one or more of the autonomous vehicles of the cluster of autonomous vehicles a signal to adjust a cost of traversing the road segment in order to increase a likelihood of the one or more of the autonomous vehicles of the cluster of autonomous vehicles avoiding the road segment, **characterized in that** the sending the signal is based on whether the one or more of the autonomous vehicles of the cluster of autonomous vehicles are transporting passengers and/or the sending the signal is based on a state of charge or fuel of the one or more of the autonomous vehicles of the cluster of autonomous vehicles.

11. The system of claim 10, wherein the one or more processors are further configured to determine that the cluster of autonomous vehicles is likely to occur based on a sliding window of time.

12. The system of claim 10 or claim 11, wherein:
the one or more processors are further configured to determine that the cluster of autonomous vehicles is likely to occur based on a threshold number of autonomous vehicles expected to traverse the road segment during the sliding window of time; and/or
the one or more processors are further configured to determine the sliding window based on a type of the road segment.

13. The system of any of claims 10 to 12, wherein the signal is a first signal and the one or more processors are further configured to send a second signal to a second one of the one or more of the autonomous vehicles of the cluster of autonomous vehicles to adjust the cost of traversing the road segment, wherein the first signal is configured to cause a first adjustment in the cost and the second signal is configured to cause a second adjustment in the cost, and wherein the first adjustment is different from the second adjustment.

14. The system of any of claims 10 to 13, wherein:
the one or more processors are further configured to continue to send additional signals to the one or more of the autonomous vehicles of the cluster of autonomous vehicles until the one or more of the autonomous vehicles of the cluster of autonomous vehicles change to one or more new routes that do not include the road segment; and/or
the signal includes an instruction indicating how long the cost is to be adjusted.

15. The system of any of claims 10 to 14, further comprising the autonomous vehicle.

## Patentansprüche

1. Verfahren, umfassend:
Identifizieren (1010), durch einen oder mehrere Prozessoren (120) von einer oder mehreren Server-Rechenvorrichtungen (410), einer Vielzahl von Routen (610, 610A, 610B, 610C), wobei jede Route der Vielzahl eine aktuelle Route ist, auf der ein autonomes Fahrzeug (110, 110A, 110B, 110C) einer Flotte von autonomen Fahrzeugen derzeit fährt, wobei jedes der autonomen Fahrzeuge eine kostenbasierte Analyse verwendet, um Routen zu bestimmen;
Bestimmen (1020), durch den einen oder die mehreren Prozessoren, dass eine Ansammlung von autonomen Fahrzeugen der Flotte von autonomen Fahrzeugen wahrscheinlich auf einem Straßensegment (710) auftreten wird; und
Senden (1030), durch den einen oder die mehreren Prozessoren, eines Signals an eines oder mehrere der autonomen Fahrzeuge der Ansammlung von autonomen Fahrzeugen, eines Signals zum Anpassen der Kosten für das Befahren des Straßensegments, um eine Wahrscheinlichkeit zu erhöhen, dass das eine oder die mehreren der autonomen Fahrzeuge der Ansammlung von autonomen Fahrzeugen das Straßensegment vermeiden, **dadurch gekennzeichnet, dass**
das Senden des Signals darauf basiert, ob das eine oder die mehreren der autonomen Fahrzeuge der Ansammlung von autonomen Fahrzeugen Passagiere befördern und/oder das Senden des Signals
auf einem Lade- oder Kraftstoffzustand des einen oder der mehreren der autonomen Fahrzeuge der Ansammlung von autonomen Fahrzeugen basiert.

2. Verfahren nach Anspruch 1, wobei das Senden des Signals darauf basiert, ob das eine oder die mehreren der autonomen Fahrzeuge der Ansammlung von autonomen Fahrzeugen Passagiere befördern.

3. Verfahren nach Anspruch 1, wobei das Senden des Signals auf einem Lade- oder Kraftstoffzustand des einen oder der mehreren der autonomen Fahrzeuge der Ansammlung von autonomen Fahrzeugen basiert.

4. Verfahren nach einem vorhergehenden Anspruch, wobei jede Route der Vielzahl von Routen eine Liste von Kartenrandinformationen beinhaltet, die jeweils einem anderen Straßensegment entsprechen.

5. Verfahren nach einem vorhergehenden Anspruch, wobei das Bestimmen, dass die Ansammlung von autonomen Fahrzeugen wahrscheinlich auftreten wird, auf einem gleitenden Zeitfenster basiert.

6. Verfahren nach Anspruch 5, wobei das Bestimmen, dass die Ansammlung von autonomen Fahrzeugen wahrscheinlich auftreten wird, auf einer Schwellenanzahl von autonomen Fahrzeugen basiert, von denen erwartet wird, dass sie das Straßensegment während des gleitenden Zeitfensters befahren, und optional wobei das Verfahren ferner Folgendes umfasst:
Bestimmen der Schwellenanzahl von autonomen Fahrzeugen basierend auf einer Art des Straßensegments und/oder Bestimmen des gleitenden Zeitfensters basierend auf einer Art des Straßensegments.

7. Verfahren nach einem vorhergehenden Anspruch, wobei das Signal ein erstes Signal ist und das Verfahren ferner das Senden eines zweiten Signals an ein zweites des einen oder der mehreren der autonomen Fahrzeuge der Ansammlung von autonomen Fahrzeugen umfasst, um die Kosten für das Befahren des Straßensegments anzupassen, wobei das erste Signal dazu konfiguriert ist, eine erste Anpassung der Kosten zu bewirken, und das zweite Signal dazu konfiguriert ist, eine zweite Anpassung der Kosten zu bewirken, und wobei sich die erste Anpassung von der zweiten Anpassung unterscheidet.

8. Verfahren nach einem vorhergehenden Anspruch, ferner umfassend das Fortsetzen des Sendens zusätzlicher Signale an das eine oder die mehreren der autonomen Fahrzeuge der Ansammlung von autonomen Fahrzeugen, bis das eine oder die mehreren der autonomen Fahrzeuge der Ansammlung von autonomen Fahrzeugen zu einer oder mehreren neuen Routen wechseln, die das Straßensegment nicht beinhalten, und optional wobei das Verfahren ferner das Begrenzen von Anpassungen der Kosten des Straßensegments für das eine oder die mehreren der autonomen Fahrzeuge der Ansammlung von autonomen Fahrzeugen auf ein Schwellenmaximum umfasst.

9. Verfahren nach einem vorhergehenden Anspruch, wobei das Signal eine Anweisung beinhaltet, die angibt, wie lange die Kosten anzupassen sind.

10. System, umfassend einen oder mehrere Prozessoren (120), die zu Folgendem konfiguriert sind:
Identifizieren (1010) einer Vielzahl von Routen (610, 610a, 610B, 610C), wobei jede Route der Vielzahl eine aktuelle Route ist, auf der ein autonomes Fahrzeug (110, 110A, 110B, 110C) einer Flotte von autonomen Fahrzeugen derzeit fährt, wobei jedes der autonomen Fahrzeuge eine kostenbasierte Analyse verwendet, um Routen zu bestimmen;
Bestimmen (1020), dass eine Ansammlung von autonomen Fahrzeugen der Flotte von autonomen Fahrzeugen wahrscheinlich auf einem Straßensegment (710) auftreten wird; und
Senden (1030) eines Signals an eines oder mehrere der autonomen Fahrzeuge der Ansammlung von autonomen Fahrzeugen, eines Signals zum Anpassen der Kosten für das Befahren des Straßensegments, um eine Wahrscheinlichkeit zu erhöhen, dass das eine oder die mehreren der autonomen Fahrzeuge der Ansammlung von autonomen Fahrzeugen das Straßensegment vermeiden, **dadurch gekennzeichnet, dass** das Senden des Signals darauf basiert, ob das eine oder
die mehreren der autonomen Fahrzeuge der Ansammlung von autonomen Fahrzeugen Passagiere befördern und/oder das Senden des Signals auf einem Lade- oder Kraftstoffzustand des einen oder der mehreren der autonomen Fahrzeuge der Ansammlung von autonomen Fahrzeugen basiert.

11. System nach Anspruch 10, wobei der eine oder die mehreren Prozessoren ferner dazu konfiguriert sind, basierend auf einem gleitenden Zeitfenster zu bestimmen, dass die Ansammlung von autonomen Fahrzeugen wahrscheinlich auftreten wird.

12. System nach Anspruch 10 oder Anspruch 11, wobei:
der eine oder die mehreren Prozessoren ferner dazu konfiguriert sind, basierend auf einer Schwellenanzahl von autonomen Fahrzeugen, von denen erwartet wird, dass sie das Straßensegment während des gleitenden Zeitfensters befahren, zu bestimmen, dass die Ansammlung von autonomen Fahrzeugen wahrscheinlich auftreten wird; und/oder
der eine oder die mehreren Prozessoren ferner dazu konfiguriert sind, das gleitende Fenster basierend auf einer Art des Straßensegments zu bestimmen.

13. System nach einem der Ansprüche 10 bis 12, wobei das Signal ein erstes Signal ist und der eine oder die mehreren Prozessoren ferner dazu konfiguriert sind, ein zweites Signal an ein zweites des einen oder der mehreren der autonomen Fahrzeuge der Ansammlung von autonomen Fahrzeugen zu senden, um die Kosten für das Befahren des Straßensegments anzupassen, wobei das erste Signal dazu konfiguriert ist, eine erste Anpassung der Kosten zu bewirken, und das zweite Signal dazu konfiguriert ist, eine zweite Anpassung der Kosten zu bewirken, und wobei sich die erste Anpassung von der zweiten Anpassung unterscheidet.

14. System nach einem der Ansprüche 10 bis 13, wobei:
der eine oder die mehreren Prozessoren ferner dazu konfiguriert sind, weiterhin zusätzliche Signale an das eine oder die mehreren der autonomen Fahrzeuge der Ansammlung von autonomen Fahrzeugen zu senden, bis das eine oder die mehreren der autonomen Fahrzeuge der Ansammlung von autonomen Fahrzeugen zu einer oder mehreren neuen Routen wechseln, die das Straßensegment nicht beinhalten; und/oder
das Signal eine Anweisung beinhaltet, die angibt, wie lange die Kosten anzupassen sind.

15. System nach einem der Ansprüche 10 bis 14, ferner umfassend das autonome Fahrzeug.

## Revendications

1. Procédé comprenant :
l'identification (1010), par un ou plusieurs processeurs (120) d'un ou plusieurs dispositifs informatiques serveurs (410), d'une pluralité d'itinéraires (610, 610A, 610B, 610C), chaque itinéraire de la pluralité étant un itinéraire actuel sur lequel un véhicule autonome (110, 110A, 110B, 110C) d'une flotte de véhicules autonomes circule actuellement, dans lequel chacun des véhicules autonomes utilise une analyse basée sur les coûts pour déterminer les itinéraires ;
la détermination (1020), par l'un ou plusieurs processeurs, qu'un groupe de véhicules autonomes de la flotte de véhicules autonomes est susceptible de se produire sur un segment de route (710) ; et
l'envoi (1030), par l'un ou plusieurs processeurs, d'un signal à un ou plusieurs des véhicules autonomes du groupe de véhicules autonomes d'un signal pour ajuster un coût de circulation sur le segment de route afin d'augmenter une probabilité que l'un ou plusieurs des véhicules autonomes du groupe de véhicules autonomes évitent le segment de route,
**caractérisé en ce que**
l'envoi du signal est basé sur le fait que l'un ou plusieurs des véhicules autonomes du groupe de véhicules autonomes transportent ou non des passagers et/ou
l'envoi du signal est basé sur un état de charge ou de carburant de l'un ou plusieurs des véhicules autonomes du groupe de véhicules autonomes.

2. Procédé selon la revendication 1, dans lequel l'envoi du signal est basé sur le fait que l'un ou plusieurs des véhicules autonomes du groupe de véhicules autonomes transportent ou non des passagers.

3. Procédé selon la revendication 1, dans lequel l'envoi du signal est basé sur un état de charge ou de carburant de l'un ou plusieurs des véhicules autonomes du groupe de véhicules autonomes.

4. Procédé selon l'une quelconque des revendications précédentes, dans lequel chaque itinéraire de la pluralité d'itinéraires comprend une liste d'arêtes d'informations de carte correspondant chacune à un segment de route différent.

5. Procédé selon l'une quelconque des revendications précédentes, dans lequel la détermination que le groupe de véhicules autonomes est susceptible de se produire est basée sur une fenêtre temporelle dynamique.

6. Procédé selon la revendication 5, dans lequel la détermination que le groupe de véhicules autonomes est susceptible de se produire est basée sur un nombre seuil de véhicules autonomes censés circuler sur le segment de route pendant la fenêtre temporelle dynamique, et éventuellement dans lequel le procédé comprend en outre :
la détermination du nombre seuil de véhicules autonomes sur la base d'un type du segment de route et/ou la détermination de la fenêtre temporelle dynamique sur la base d'un type du segment de route.

7. Procédé selon l'une quelconque des revendications précédentes, dans lequel le signal est un premier signal, et le procédé comprend en outre l'envoi d'un deuxième signal à un deuxième de l'un ou plusieurs des véhicules autonomes du groupe de véhicules autonomes pour ajuster le coût de circulation sur le segment de route, dans lequel le premier signal est configuré pour entraîner un premier ajustement du coût et le deuxième signal est configuré pour entraîner un deuxième ajustement du coût, et dans lequel le premier ajustement est différent du deuxième ajustement.

8. Procédé selon l'une quelconque des revendications précédentes, comprenant en outre la poursuite de l'envoi de signaux supplémentaires à l'un ou plusieurs des véhicules autonomes du groupe de véhicules autonomes jusqu'à ce que l'un ou plusieurs des véhicules autonomes du groupe de véhicules autonomes changent pour un ou plusieurs nouveaux itinéraires qui ne comprennent pas le segment de route, et facultativement dans lequel le procédé comprend en outre la limitation des ajustements du coût du segment de route pour l'un ou plusieurs des véhicules autonomes du groupe de véhicules autonomes à un seuil maximum.

9. Procédé selon l'une quelconque des revendications précédentes, dans lequel le signal comprend une instruction indiquant combien de temps le coût doit être ajusté.

10. Système comprenant un ou plusieurs processeurs (120) configurés pour :
identifier (1010) une pluralité d'itinéraires (610, 610A, 610B, 610C), chaque itinéraire de la pluralité étant un itinéraire actuel sur lequel un véhicule autonome (110, 110A, 110B, 110C) d'une flotte de véhicules autonomes circule actuellement, dans lequel chacun des véhicules autonomes utilise une analyse basée sur les coûts pour déterminer les itinéraires ;
déterminer (1020) qu'un groupe de véhicules autonomes de la flotte de véhicules autonomes est susceptible de se produire sur un segment de route (710) ; et
envoyer (1030) un signal à un ou plusieurs des véhicules autonomes du groupe de véhicules autonomes un signal pour ajuster un coût de circulation sur le segment de route afin d'augmenter une probabilité que l'un ou plusieurs des véhicules autonomes du groupe de véhicules autonomes évitent le segment de route,
**caractérisé en ce que** l'envoi du signal est basé sur le fait que l'un ou plusieurs des véhicules autonomes du groupe de véhicules autonomes transportent ou non des passagers et/ou l'envoi du signal est basé sur un état de charge ou de carburant de l'un ou plusieurs des véhicules autonomes du groupe de véhicules autonomes.

11. Système selon la revendication 10, dans lequel l'un ou plusieurs processeurs sont en outre configurés pour déterminer que le groupe de véhicules autonomes est susceptible de se produire sur la base d'une fenêtre temporelle dynamique.

12. Système selon la revendication 10 ou la revendication 11, dans lequel :
l'un ou plusieurs processeurs sont en outre configurés pour déterminer que le groupe de véhicules autonomes est susceptible de se produire sur la base d'un nombre seuil de véhicules autonomes censés circuler sur le segment de route pendant la fenêtre temporelle dynamique ; et/ou
l'un ou plusieurs processeurs sont en outre configurés pour déterminer la fenêtre dynamique sur la base d'un type de segment de route.

13. Système selon l'une quelconque des revendications 10 à 12, dans lequel le signal est un premier signal et l'un ou plusieurs processeurs sont en outre configurés pour envoyer un deuxième signal à un deuxième de l'un ou plusieurs des véhicules autonomes du groupe de véhicules autonomes pour ajuster le coût de circulation sur le segment de route, dans lequel le premier signal est configuré pour entraîner un premier ajustement du coût et le deuxième signal est configuré pour entraîner un deuxième ajustement du coût, et dans lequel le premier ajustement est différent du deuxième ajustement.

14. Système selon l'une quelconque des revendications 10 à 13, dans lequel :
l'un ou plusieurs processeurs sont en outre configurés pour continuer à envoyer des signaux supplémentaires à l'un ou plusieurs des véhicules autonomes du groupe de véhicules autonomes jusqu'à ce que l'un ou plusieurs des véhicules autonomes du groupe de véhicules autonomes changent pour un ou plusieurs nouveaux itinéraires qui ne comprennent pas le segment routier ; et/ou
le signal comprend une instruction indiquant combien de temps le coût doit être ajusté.

15. Système selon l'une quelconque des revendications 10 à 14, comprenant en outre le véhicule autonome.
